# EUROPEAN PATENT SPECIFICATION

(11) **EP 2 945 418 B1**
(45) Date of publication and mention of the grant of the patent: **12.07.2017**
(21) Application number: 13874159.0
(22) Date of filing: 12.09.2013
(51) Int. Cl.: H04W 28/18, H04W 52/04, H04W 8/22, H04W 24/10, H04W 52/02

(54) **METHOD AND APPARATUS FOR ADJUSTING NETWORK CONFIGURATION**
VERFAHREN UND VORRICHTUNG ZUR EINSTELLUNG DER NETZWERKKONFIGURATION
PROCÉDÉ ET APPAREIL PERMETTANT D'AJUSTER LA CONFIGURATION D'UN RÉSEAU

(30) Priority: 31.01.2013 CN 201310039018
(43) Date of publication of application: 18.11.2015
(73) Proprietor: Huawei Technologies Co., Ltd., Longgang District Shenzhen, Guangdong 518129 (CN)
(72) Inventor: ZHANG, Lei, Shenzhen Guangdong 518129 (CN); WANG, Yi, Shenzhen Guangdong 518129 (CN); ZHANG, Jiayin, Shenzhen Guangdong 518129 (CN); LIN, Yingpei, Shenzhen Guangdong 518129 (CN)
(74) Representative: Maiwald Patentanwalts GmbH
(86) International application number: PCT/CN2013/083361
(87) International publication number: WO 2014/117521

(56) References cited:
- CN-A- 101 860 948
- CN-A- 102 098 784
- CN-A- 102 685 869
- US-A1- 2004 180 701
- US-A1- 2007 004 376
- US-A1- 2008 049 653

## Description

### TECHNICAL FIELD

The present invention relates to the field of wireless communications technologies, and in particular, to a method and an apparatus for adjusting a network configuration.

### BACKGROUND

With rapid development of wireless communications technologies, a terminal device UE, such as a smartphone or tablet that is used for a wireless network develops rapidly, and hardware performance is increasingly powerful and functions are more diverse. However, a UE whose hardware performance is more powerful and functions are more diverse consumes a larger amount of electricity, and therefore a problem of energy consumption is always a bottleneck restricting development of the UE.

Currently, many energy-saving technologies are already applied to reduce energy consumption when there is no service on a UE.

For example, when there is no service on a UE, discontinuous monitoring on a channel by the UE may be implemented by modifying a configuration of the UE, to reduce energy consumption of the UE when there is no service on the UE. For example, in LTE (Long Term Evolution, Long Term Evolution), RRC (Radio Resource Control, radio resource control) of the UE includes two states: RRC_IDLE and RRC_CONNECTED. In the RRC_IDLE state, DRX (Discontinuous Reception, discontinuous reception) may be configured on the UE side to implement discontinuous monitoring on a paging channel. In the RRC_CONNECTED state, the UE can discontinuously monitor a PDCCH (Physical Downlink Control Channel, physical downlink control channel) by using DRX, to reduce energy consumption during the monitoring.

For another example, when a network application and a service end, a UE may make a request to an eNodeB (evolved NodeB, evolved NodeB or NodeB) so that the UE modifies a monitoring-related configuration parameter of the UE. For example, the UE modifies a DRX configuration, releases an RRC connection, stops CQI (Channel Quality Indicator, channel quality indicator) reporting, or modifies a time interval for reporting UE measurement. After receiving a request message, the eNodeB instructs the UE to enter a corresponding energy-saving state. In this way, the UE enters an energy-saving and monitoring state by modifying a configuration on the UE side.
In the prior art, energy consumption during channel monitoring by a UE is reduced by adjusting a configuration on the UE side mostly when there is no service or a service ends. However, when there is a service on the UE or a service is running on the UE, energy consumption is extremely large, but the prior art lacks an energy-saving solution used when there is a service on the UE or a service is running on the UE. As a result, an energy-saving effect is not good. For example, currently in the market, standby time of a smartphone to which an existing energy-saving technology is applied is still relatively short, which causes a relatively short running time of the UE and relatively low user experience.
US 2008/049653 relates to a method for conserving battery power and describes that the mobile station provides feedback relating to its battery level to a base station with which it is associated, and base station may use the feedback information to adapt connected mode operation and the mobile station updates its operation parameters accordingly.

### SUMMARY

Embodiments of the present invention provide a method and an apparatus for adjusting a network configuration, which can adjust a configuration on a network side according to a specific running situation of a UE, to decrease energy consumption of the UE when there is a service on the UE or a service is running on the UE, thereby increasing running time of the UE and improving user experience.

The embodiments of the present invention adopt the following technical solutions:

According to a first aspect, an embodiment of the present invention provides a method for adjusting a network configuration, including:
receiving, by a network device, requirement information sent by a terminal device UE, where the requirement information includes electricity-saving request information of the UE or a maximum transmit power of the UE;
searching, by the network device, for a mapping relationship between service mode information and the requirement information, and determining at least one service mode of the network device according to the mapping relationship;
sending, by the network device, service mode information of the determined service mode of the network device to the UE, so that the UE determines selection information according to the received service mode information, where the service mode information is used to indicate the service mode of the network device; and
receiving, by the network device, the selection information sent by the UE, and modifying a configuration of the network device according to the determined service mode in the selection information, where the selection information corresponds to a service mode in the service mode information.

With reference to the first aspect, in a first possible implementation manner of the first aspect, the electricity-saving request information includes electricity amount information of the UE, and the searching, by the network device, for a mapping relationship between the requirement information and service mode information includes:
determining, by the network device, a mapping relationship between the electricity amount information and the service mode information; and
the determining at least one service mode of the network device according to the mapping relationship includes: determining, by the network device, the at least one service mode of the network device according to the mapping relationship corresponding to the electricity amount information.

With reference to the first aspect, in a second possible implementation manner of the first aspect, the requirement information includes the maximum transmit power of the UE, and the searching, by the network device, for a mapping relationship between the requirement information and service mode information includes:
determining, by the network device, a numeric interval in which the maximum transmit power of the UE is located, where the numeric interval corresponds to at least one mapping relationship; and
the determining at least one service mode of the network device according to the mapping relationship includes: determining the at least one service mode of the network device according to the mapping relationship corresponding to the numeric interval.

With reference to the first aspect, in multiple possible implementation manners of the first aspect, the modifying a configuration of the network device according to the determined service mode in the selection information includes:
determining, by the network device according to the service mode corresponding to the selection information, the number of antennas that is specified in the service mode; and
enabling, by the network device, a corresponding number of antennas according to the number of antennas, and receiving, by using the enabled antenna, data sent by the UE.

Further, the determining the number of antennas that is specified in the service mode includes:
detecting whether a currently required transmit power of the UE is greater than the maximum transmit power; and
if the currently required transmit power of the UE is greater than the maximum transmit power, adding a preset number of antennas, and using a total number of antennas obtained after the preset number of antennas are added, as the number of antennas that is specified in the service mode.

According to a second aspect, an embodiment of the present invention provides a method for adjusting a network configuration, including:
sending, by a terminal device UE, requirement information to a network device, where the requirement information includes electricity-saving request information of the UE or a maximum transmit power of the UE, so that the network device searches for a mapping relationship between the requirement information and a service mode, and determines at least one service mode of the network device according to the mapping relationship;
receiving, by the terminal device UE, service mode information sent by the network device, where the service mode information is acquired by the network device according to the mapping relationship, and the service mode information is used to indicate the service mode of the network device;
determining, by the terminal device UE, selection information according to the service mode information, where the selection information corresponds to a service mode in the service mode information; and
modifying, by the terminal device UE, a configuration of the terminal device according to the determined service mode in the selection information, and sending the selection information to the network device, so that the network device modifies a configuration according to the selection information.

With reference to the second aspect, in a first possible implementation manner of the second aspect, the electricity-saving request information includes electricity amount information of the UE, and
the sending, by a terminal device UE, requirement information to a network device includes: sending, by the terminal device UE, the electricity amount information of the UE to the network device, where the electricity amount information has at least one mapping relationship with a service mode, so that the network device determines the mapping relationship between the electricity amount information and the service mode, and acquires the service mode according to the mapping relationship corresponding to the electricity amount information.

With reference to the second aspect, in a second possible implementation manner of the second aspect, the modifying a configuration of the terminal device according to the determined service mode in the selection information includes:
determining a transmit power corresponding to the service mode corresponding to the selection information, and sending data to the network device based on the transmit power corresponding to the service mode;
or sending data to the network device based on the maximum transmit power of the UE.

According to a third aspect, an embodiment of the present invention provides a network device for adjusting a network configuration, including:
a receiving module, configured to receive information sent by a terminal device UE, where the information includes requirement information and selection information, and the requirement information includes electricity-saving request information of the UE or a maximum transmit power of the UE;
an analyzing module, configured to search for a mapping relationship between a service mode and the requirement information, and determine at least one service mode of the network device according to the mapping relationship;
a sending module, configured to send service mode information of the determined service mode of the network device to the UE, so that the UE determines the selection information according to the received service mode information, where the service mode information is used to indicate the service mode of the network device; and
a configuration modifying module, configured to obtain the selection information sent by the UE, and modify a configuration of the network device according to the determined service mode in the selection information, where the selection information corresponds to a service mode in the service mode information.

With reference to the third aspect, in a first possible implementation manner of the third aspect, the electricity-saving request information includes electricity amount information of the UE, and the analyzing module includes:
an electricity amount analyzing unit, configured to obtain a mapping relationship between the electricity amount information and the service mode information; and
a service mode acquiring unit, configured to determine the at least one service mode of the network device according to the mapping relationship corresponding to the electricity amount information.

With reference to the third aspect, in a second possible implementation manner of the third aspect, the requirement information includes the maximum transmit power of the UE, and the analyzing module includes:
a power analyzing unit, configured to determine a numeric interval in which the maximum transmit power of the UE is located, where the numeric interval corresponds to at least one mapping relationship; and
a service mode acquiring unit, configured to determine the at least one service mode of the network device according to the mapping relationship corresponding to the numeric interval.

With reference to the first possible implementation manner of the third aspect, in the second possible implementation manner, the configuration modifying module includes:
an antenna number analyzing unit, configured to obtain the selection information sent by the UE, and determine, according to the service mode corresponding to the selection information, the number of antennas that is specified in the service mode; and
an antenna enabling unit, configured to: according to the number of antennas, enable a corresponding number of antennas to modify an antenna enabling configuration of the network device; and receive, by using the enabled antenna, data sent by the UE.

Further, in an implementation manner, the antenna number analyzing unit is further configured to detect whether a currently required transmit power of the UE is greater than the maximum transmit power; and
the antenna enabling unit is further configured to: if the currently required transmit power of the UE is greater than the maximum transmit power, add a preset number of antennas, and use a total number of antennas obtained after the preset number of antennas are added, as the number of antennas that is specified in the service mode.

According to a fourth aspect, an embodiment of the present invention provides a terminal device for adjusting a network configuration, including:
a sending module, configured to send requirement information to a network device, where the requirement information includes electricity-saving request information of the UE or a maximum transmit power of the UE, so that the network device acquires a mapping relationship between requirement information and a service mode;
a receiving module, configured to receive service mode information sent by the network device, where the service mode information is acquired by the network device according to the mapping relationship, and the service mode information is used to indicate a service mode;
a selecting module, configured to determine selection information according to the service mode information, where the selection information corresponds to a service mode in the service mode information; and
a configuration modifying module, configured to modify a configuration of the terminal device according to the determined service mode in the selection information, and send the selection information to the network device, so that the network device modifies a configuration according to the selection information.

With reference to the fourth aspect, in a first possible implementation manner of the fourth aspect, the electricity-saving request information sent by the sending module includes electricity amount information of the UE, where the electricity amount information has at least one mapping relationship with a service mode, so that the network device determines the mapping relationship between the electricity amount information and the service mode, and acquires the service mode according to the mapping relationship corresponding to the electricity amount information.

With reference to the fourth aspect or the first possible implementation manner of the fourth aspect, the configuration modifying module includes:
a power analyzing unit, configured to determine a transmit power corresponding to the determined service mode in the selection information, so that the sending module sends data to the network device according to the transmit power corresponding to the service mode.

According to the method and the apparatus for adjusting a network configuration that are provided in the embodiments of the present invention, requirement information sent by a UE, such as electricity-saving request information of the UE or a maximum transmit power of the UE, can be received; a corresponding service mode can be selected according to the requirement information; and then a configuration of a network device can be modified according to the selected service mode. In comparison with the prior art, a configuration on a network side can be adjusted in the present invention according to a specific running situation of the UE, to decrease energy consumption of the UE when there is a service on the UE or a service is running on the UE, thereby increasing running time of the UE and improving user experience.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a method for adjusting a network configuration according to an embodiment of the present invention;
FIG. 1b is a schematic diagram of a specific example of a method for adjusting a network configuration according to an embodiment of the present invention;
FIG. 2a is a flowchart of another method for adjusting a network configuration according to an embodiment of the present invention;
FIG. 2b is a flowchart of a specific implementation procedure of another method for adjusting a network configuration according to an embodiment of the present invention;

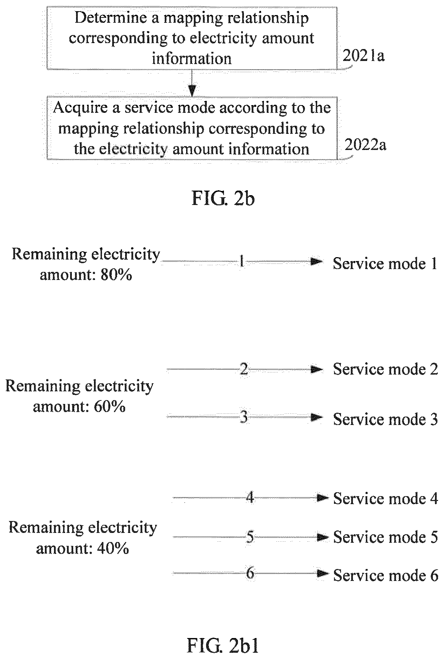

FIG. 2b1 is a schematic diagram of a specific example of another method for adjusting a network configuration according to an embodiment of the present invention;

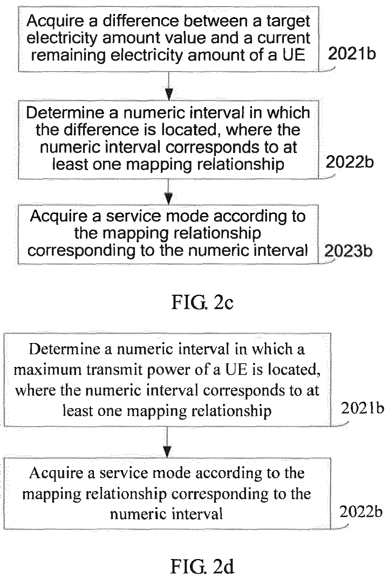

FIG. 2c is a flowchart of another specific implementation procedure of another method for adjusting a network configuration according to an embodiment of the present invention;
FIG. 2d is a flowchart of still another specific implementation procedure of another method for adjusting a network configuration according to an embodiment of the present invention;

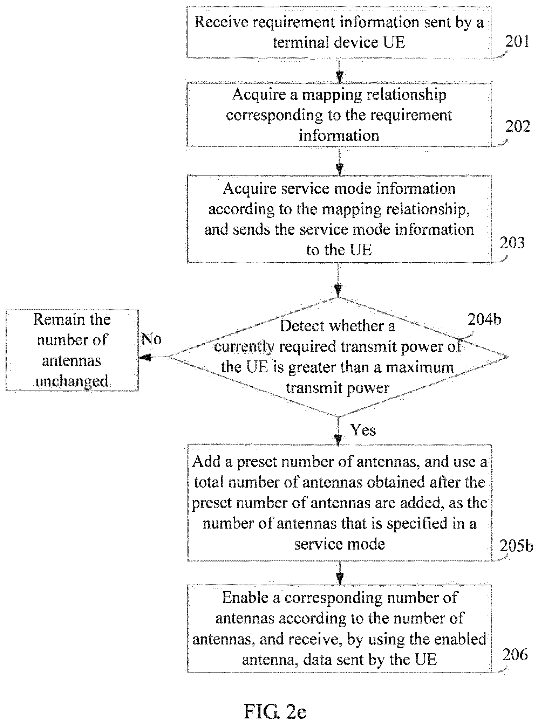

FIG. 2e is a flowchart of still another method for adjusting a network configuration according to an embodiment of the present invention;

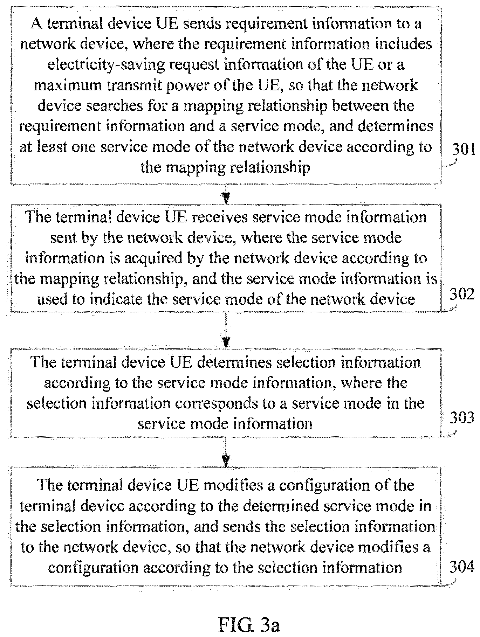

FIG. 3a is a flowchart of still another method for adjusting a network configuration according to an embodiment of the present invention;

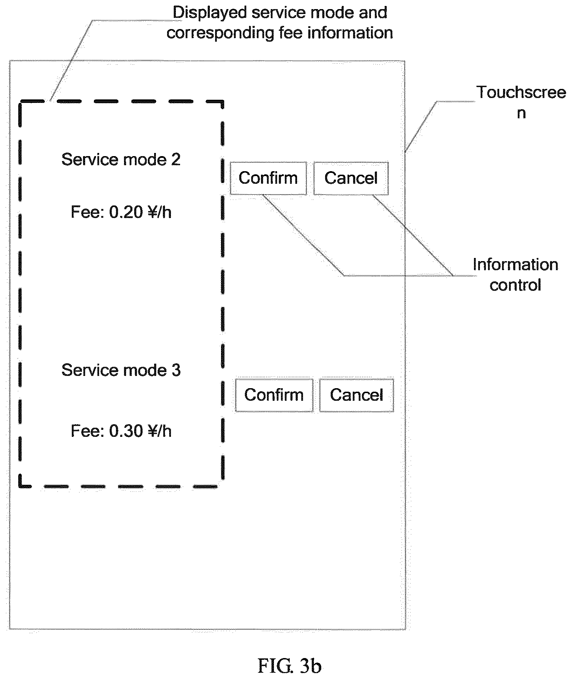

FIG. 3b is a schematic diagram of a specific example of still another method for adjusting a network configuration according to an embodiment of the present invention;

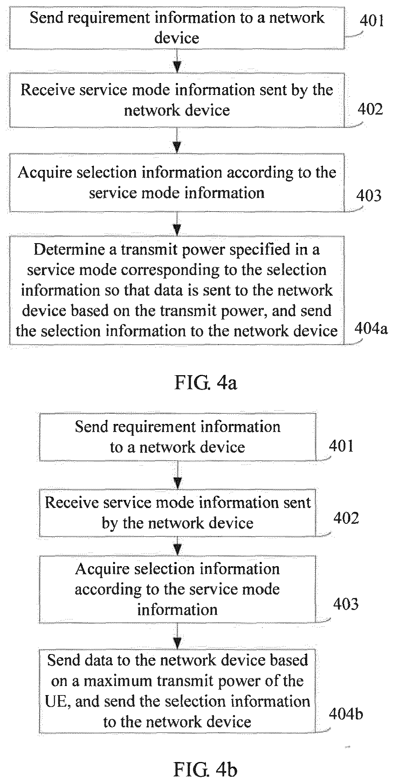

FIG. 4a is a flowchart of still another method for adjusting a network configuration according to an embodiment of the present invention;
FIG. 4b is a flowchart of still another method for adjusting a network configuration according to an embodiment of the present invention;

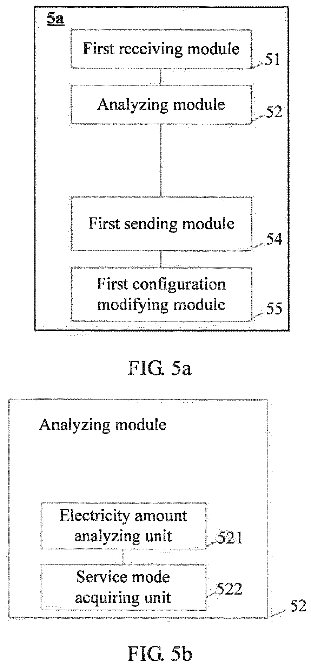

FIG. 5a is a schematic structural diagram of a network device according to an embodiment of the present invention;
FIG. 5b is a schematic structural diagram of some details of a network device according to an embodiment of the present invention;

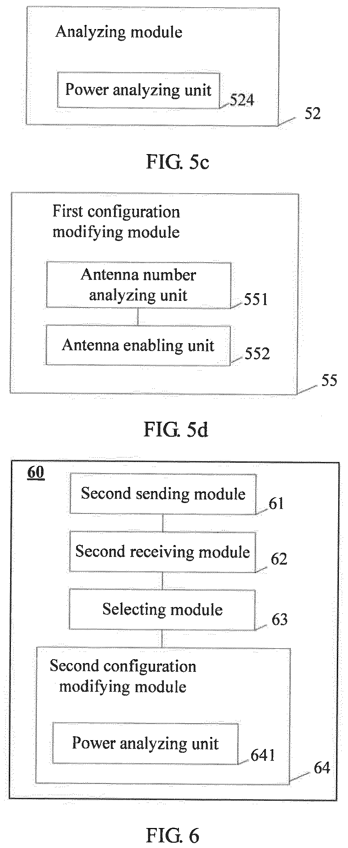

FIG. 5c is a schematic structural diagram of some other details of a network device according to an embodiment of the present invention;
FIG. 5d is a schematic structural diagram of some other details of a network device according to an embodiment of the present invention;
FIG. 6 is a schematic structural diagram of a terminal device according to an embodiment of the present invention;

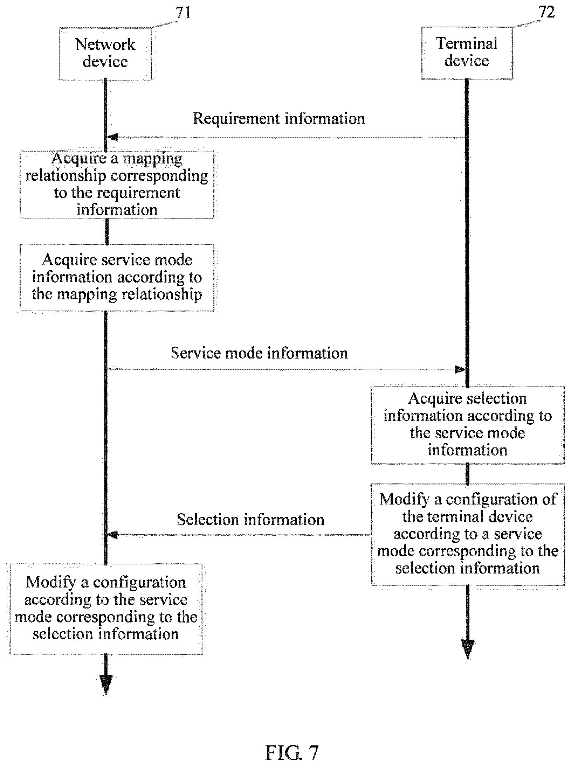

FIG. 7 is a schematic diagram of a system according to an embodiment of the present invention;

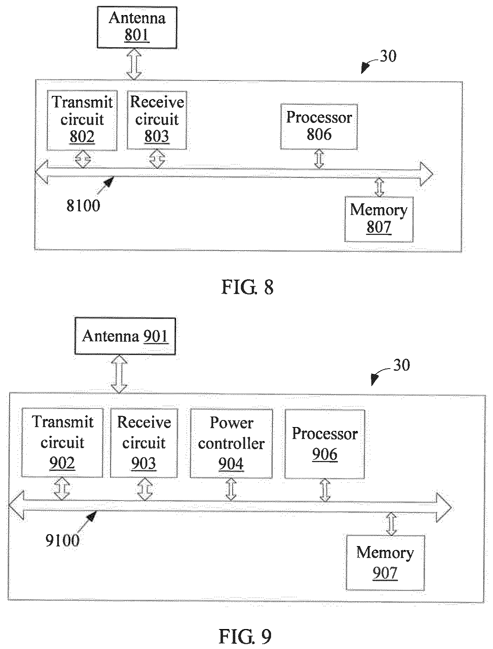

FIG. 8 is a schematic structural diagram of another terminal device according to an embodiment of the present invention; and
FIG. 9 is a schematic structural diagram of another network device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

To make the advantages of the technical solutions of the present invention clearer, the following describes the present invention in detail with reference to the accompanying drawings and embodiments.

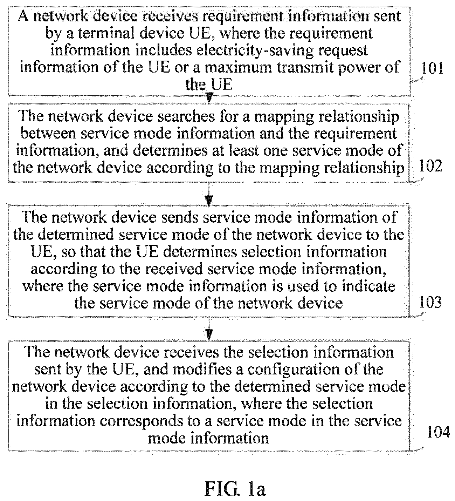

According to one aspect, an embodiment of the present invention provides a method for adjusting a network configuration. As shown in FIG. 1a, the method includes:
101. A network device receives requirement information sent by a terminal device UE, where the requirement information includes electricity-saving request information of the UE or a maximum transmit power of the UE.

In this embodiment, the network device may receive the requirement information sent by the UE, and in this embodiment, the network device may be a device that has a function of performing data exchange with the UE by using a wireless network, for example, a base station or a server.

The requirement information may include but is not limited to the electricity-saving request information of the UE or the maximum transmit power of the UE. It should be noted that, the requirement information sent by the UE may be information that is input by a user and received by the UE by using an input device. For example, the user may input a value to a smartphone by using a touchscreen, and the smartphone send, to a base station, the value that is input by the user, as the maximum transmit power.

Further, in this embodiment, the requirement information may include the electricity-saving request information, which may be information that is used to trigger the network device to perform 102 to 104, such as bit information or signaling that are well known by a person skilled in the art.

102. The network device searches for a mapping relationship between service mode information and the requirement information, and determines at least one service mode of the network device according to the mapping relationship.

The mapping relationship is a correspondence between requirement information and a service mode.

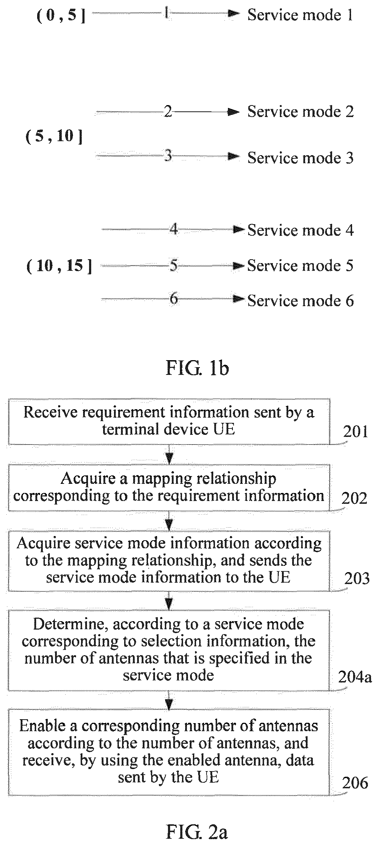

In this embodiment, the network may analyze the requirement information sent by the UE, and acquire a mapping relationship corresponding to the requirement information. For example, the requirement information received by a base station includes the maximum transmit power of the UE. The base station may determine a numeric interval in which the maximum transmit power is located. As shown in FIG. 1b, the numeric interval may be a segment of consecutive interval values prestored in the base station, and each numeric interval may correspond to at least one service mode. A correspondence between a service mode and a numeric interval that is determined based on the maximum transmit power is a correspondence between requirement information and a service mode. For example, the maximum transmit power is 6; then a numeric interval in which the maximum transmit power is located is (5,10], and a mapping relationship corresponding to the requirement information are 2 or 3. The service mode information is acquired according to the mapping relationships.

103. The network device sends service mode information of the determined service mode of the network device to the UE, so that the UE determines selection information according to the received service mode information, where the service mode information is used to indicate the service mode of the network device.

In implementation, the UE acquires the selection information according to the service mode information, and the service mode information is used to indicate at least one service mode.

For example, as shown in FIG. 1b, the maximum transmit power is 6; then the numeric interval in which the maximum transmit power is located is (5,10], the mapping relationship corresponding to the requirement information are 2 or 3. The network device may determine a service mode 2 and a service mode 3 according to the mapping relationships 2 and 3 respectively, and send, to the UE, information that is used to indicate the service mode 2 and service mode 3 respectively, such as name information, as the service mode information.

Further, the service mode information that the base station sends to the UE may further include fee information, which, for example, is shown in Table 1.

**Table 1**

| **Service Mode** | **Fee** |
|---|---|
| Service mode 2 | 0.20 ¥/h |
| Service mode 3 | 0.30 ¥/h |

That is, a fee of the service mode 2 is 0.20 yuan per hour, and a fee of the service mode 3 is 0.30 yuan per hour. In this embodiment, fee information and service modes may be in a one-to-one correspondence. The base station may add the fee information into the service mode information to send to the UE.

104. The network device receives the selection information sent by the UE, and modifies a configuration of the network device according to the determined service mode in the selection information, where the selection information corresponds to a service mode in the service mode information.

The selection information corresponds to a service mode in the service mode information.

In this embodiment, the selection information may correspond to a service mode. The network device may determine, according to the selection information, a service mode selected by the UE, and modify a configuration of the network device in an implementation manner that is well known by a person skilled in the art, so that the network device supports the service mode corresponding to the selection information.

For example, after receiving the selection information sent by the UE, the base station determines, according to the selection information, that the service mode selected by the UE is the service mode 2. In addition, configuration information corresponding to the service mode 2 is preset in the base station, and the configuration information may be information that is well known by a person skilled in the art and is used to indicate the number of antennas in the base station. For example, the configuration information indicates that the number of antennas in the base station is 3; then after the UE selects the service mode 2, the base station determines, according to the selection information sent by the UE, that the number of antennas that need to be enabled by the base station in the service mode 2 is 3; and the base station may set, by enabling antennas, the number of antennas for performing data exchange with the UE to 3, thereby modifying a configuration of the base station.

When a transmit power of the UE is relatively low, the base station may receive data by using multiple antennas, and perform processing such as beamforming and the like on the received data, thereby ensuring quality of data transmitted by the UE. That is, when the quality of the data transmitted by the UE is relatively stable, more antennas enabled by the base station when receiving data indicates a lower required transmit power of the UE. Therefore, in this embodiment, the network device may increase the number of enabled antennas by modifying a configuration, to reduce the required transmit power of the UE. A lower required transmit power of the UE indicates lower required energy consumption of the UE for performing service data exchange, thereby increasing running time of the UE and improving user experience. For example, when the transmit power of the UE is relatively low, the number of antennas enabled by the network device is increased by modifying a configuration of the network device. By performing processing such as beamforming and the like on data received by using multiple antennas, the network device ensures quality of data transmitted by the UE. In this way, the UE can maintain a relatively low transmit power, thereby saving energy consumption of the UE.

Further optionally, with reference to the method for adjusting a network configuration shown in FIG. 1a, the network device may further include a solution shown in FIG. 2a.

201. Receive requirement information sent by a terminal device UE.

The requirement information includes electricity-saving request information of the UE or a maximum transmit power of the UE.

202. Acquire a mapping relationship corresponding to the requirement information.

The mapping relationship is a correspondence between requirement information and a service mode.

Optionally, in this embodiment, as shown in FIG. 2b, a specific solution of 201 to 202 may include:
2021a. Determine a mapping relationship corresponding to electricity amount information.

The electricity amount information corresponds to at least one mapping relationship.

In this embodiment, the electricity amount information may be a remaining electricity amount of the UE. For example,

FIG. 2b1 shows a mapping relationship corresponding to the remaining electricity amount, and a service mode corresponding to the remaining electricity amount.

When the remaining electricity amount is 80%, the network device may determine a service mode 1 according to a mapping relationship 1; when the remaining electricity amount is 60%, the network device may determine service modes 2 and 3 according to mapping relationships 2 and 3 respectively; and when the remaining electricity amount is 40%, the network device may determine service modes 4, 5, and 6 according to mapping relationships 4, 5 and 6.

2022a. Acquire a service mode according to the mapping relationship corresponding to the electricity amount information.

Optionally in parallel, in this embodiment, as shown in FIG. 2c, a specific solution of 201 to 202 may include:
2021b. Acquire a difference between a target electricity amount value and a current remaining electricity amount of the UE.

The electricity amount information may be a target electricity amount value, and the target electricity amount value of the UE is less than the current remaining electricity amount of the UE.

In this embodiment, the target electricity amount value may be input into the UE by a user by using an input device, and then is sent to the network device by the UE. The target electricity amount value may also be automatically analyzed and acquired by the UE by using an existing technical means.

For example, a current remaining electricity amount of a smartphone is 800 mA; then the user may input 500 mA as a target electricity amount value, so that during a process in which the electricity amount of the smartphone decreases from 800 mA to 500 mA, the network device and the smartphone may perform 2022b to 2023b to reduce energy consumption of the smartphone.

2022b. Determine a numeric interval in which the difference is located, where the numeric interval corresponds to at least one mapping relationship.

For example, the network device may determine, according to consecutive interval values prestored in the network device, the numeric interval in which the difference between the target electricity amount value and the current remaining electricity amount of the UE is located.

2023b. Acquire a service mode according to the mapping relationship corresponding to the numeric interval.

For example, a current remaining electricity amount of a smartphone is 800 mA, and a target electricity amount value is 500 mA, so a difference is 300 mA. A service mode x may be acquired according to a mapping relationship of a numeric interval in which 300 mA is located, and configuration information x that is prestored in the base station and corresponds to the service mode x may be information that is used to indicate the number of antennas added in the base station. For example, during a process of performing service data exchange with the smartphone, the number of antennas originally enabled by the base station are two, and the configuration information x indicates that the number of antennas enabled in the base station is increased by 3. After the smartphone selects the service mode x, the base station determines, according to the selection information sent by the smartphone, that five antennas need to be enabled in the service mode x by the base station during the process of performing service data exchange with the smartphone, and performs, by using a technical means such as commonly used beamforming, processing on data received by using multiple antennas.

It should be noted that, in this embodiment, the network device may also improve performance of a relationship between the number of UEs and a coordinated distance by using a coordinated multiple node transmission/reception CoMP technology. For example, during a process of performing service data exchange with the smartphone, the number of antennas originally enabled by the base station are two, and the configuration information x indicates that the number of antennas enabled in the base station is increased by 3. After the smartphone selects the service mode x, the base station determines, according to the selection information sent by the smartphone, that five antennas need to be enabled in the service mode x by the base station during the process of performing service data exchange with the smartphone, and then the base station may enable, by using the CoMP technology, an antenna in a neighboring base station to receive data transmitted by the terminal device, and then perform, by using a technical means such as commonly used beamforming, processing on data received by using multiple antennas.

As well known by a person skilled in the art, when a transmit power of a UE is relatively low, a base station may receive data by using multiple antennas, and perform processing such as beamforming and the like on the received data, thereby ensuring quality of data transmitted by the UE. That is, when the quality of the data transmitted by the UE is relatively stable, more antennas enabled by the base station when receiving data indicates a lower required transmit power of the UE. Therefore, in this embodiment, a network device modifies a configuration to increase the number of enabled antennas, thereby reducing the required transmit power of the UE. A lower required transmit power of the UE indicates lower required energy consumption of the UE for performing service data exchange, thereby increasing running time of the UE and improving user experience.

Further optionally, in this embodiment, as shown in FIG. 2d, 202 may include:
2021b. Determine a numeric interval in which the maximum transmit power of the UE is located, where the numeric interval corresponds to at least one mapping relationship.

It should be noted that, in this embodiment, the maximum transmit power of the UE that is received by the network device may, as well known by a technical person, indicate an upper power limit when the UE transmits a radio wave. For example, the maximum transmit power is 1 milliwatt; then power of the smartphone for transmitting a radio wave during a running process does not exceed 1 milliwatt.

2022b. Acquire a service mode according to the mapping relationship corresponding to the numeric interval.

For example, the smartphone is currently on an edge of a cell. If a transmit power required for ensuring quality of data transmitted in a service is 2 mW, which corresponds to a transmit power 2 mW of the smartphone, the number of antennas that need to be enabled by the base station is three. A service mode y may be acquired according to a mapping relationship of a numeric interval in which 2 mW is located, and configuration information y that is prestored in the base station and corresponds to the service mode y may be information that is used to indicate the number of antennas added in the base station. For example, in this example, the number of antennas originally enabled by the base station is three, and the configuration information y indicates that the number of antennas enabled in the base station is increased by 3. After the smartphone selects the service mode y, the base station determines, according to the selection information sent by the smartphone, that six antennas need to be enabled in the service mode y by the base station during a process of performing service data exchange with the smartphone, and performs, by using a technical means such as commonly used beamforming, processing on data received by using multiple antennas.

As well known by a person skilled in the art, when a transmit power of a UE is relatively low, a base station may receive data by using multiple antennas, and perform processing such as beamforming and the like on the received data, thereby ensuring quality of data transmitted by the UE. That is, when the quality of the data transmitted by the UE is relatively stable, more antennas enabled by the base station when receiving data indicates a lower required transmit power of the UE. Therefore, in this embodiment, a network device modifies a configuration to increase the number of enabled antennas, thereby reducing the required transmit power of the UE. A lower required transmit power of the UE indicates lower required energy consumption of the UE for performing service data exchange, thereby increasing running time of the UE and improving user experience.

203. Acquire service mode information according to the mapping relationship, and sends the service mode information to the UE, so that the UE acquires selection information according to the service mode information, where the service mode information is used to indicate at least one service mode.

204a. Determine, according to a service mode corresponding to the selection information, the number of antennas that is specified in the service mode.

Optionally in parallel, as shown in FIG. 2e, after the network device performs 203, the method may further include:
204b. Detect whether a currently required transmit power of the UE is greater than the maximum transmit power.

For example, the network device may acquire, by using a technical means commonly used in a current communications protocol, a required transmit power of the UE on a current channel, and detect whether the required transmit power of the UE on the current channel is greater than the maximum transmit power that is used as the requirement information and is sent by the UE.

In an actual application, to ensure communication quality, a protocol generally specifies a required transmit power of the UE when transmitting data on different channels of a cell. A farther distance from the base station indicates a higher required transmit power of the UE. As well known by a person skilled in the art, when the UE communicates with the base station, the transmit power of the UE is controlled by the base station by sending signaling to the UE. In this embodiment, to reduce energy consumption, the UE sends the maximum transmit power as the requirement information, so that when the network device performs data exchange with the UE, an actual transmit power of the UE does not exceed the maximum transmit power that is used as the requirement information.

205b. If the currently required transmit power of the UE is greater than the maximum transmit power, add a preset number of antennas, and use a total number of antennas obtained after the preset number of antennas are added, as the number of antennas that is specified in the service mode.

In this embodiment, the currently required transmit power of the UE is greater than the maximum transmit power, and because the transmit power of the UE in actual running does not exceed the maximum transmit power, the network device needs to add a preset number of antennas to meet quality of communication between the network device and the UE. For example, the currently required transmit power of the UE is 2 mW, and the maximum transmit power is 1 mW; then the base station needs to increase the number of antennas from 2 to 5 when performing communication with the UE, to meet communication quality in a case in which the actual transmit power of the UE does not exceed 1 mW.

If the currently required transmit power of the UE is not greater than the maximum transmit power, the number of antennas remains unchanged.

206. Enable a corresponding number of antennas according to the number of antennas, and receive, by using the enabled antenna, data sent by the UE.

For example, after receiving the selection information sent by the UE, the base station determines, according to the selection information, that the service mode selected by the UE is the service mode 1. In addition, configuration information corresponding to the service mode 1 is preset in the base station, and the configuration information may be information that is well known by a person skilled in the art and is used to indicate the number of antennas in the base station. If the configuration information indicates that the number of antennas in the base station is 5, after the UE selects the service mode 1, the base station determines, according to the selection information sent by the UE, that the number of antennas that need to be enabled in the service mode 1 by the base station is 5. In this case, the number of antennas enabled by the base station when performing data exchange with the UE is 2, and the base station may enable another two antennas, thereby modifying a configuration of the base station.

In parallel, another method for adjusting a network configuration provided by an embodiment of the present invention is implemented by a user terminal or a terminal device. As shown in FIG, 3a, the method includes:
301. A terminal device UE sends requirement information to a network device, where the requirement information includes electricity-saving request information of the UE or a maximum transmit power of the UE, so that the network device searches for a mapping relationship between the requirement information and a service mode, and determines at least one service mode of the network device according to the mapping relationship.

The requirement information sent by the UE to the network device includes but is not limited to the electricity-saving request information of the UE or the maximum transmit power of the UE, so that the network device acquires a mapping relationship corresponding to the requirement information, where the mapping relationship is a correspondence between requirement information and a service mode.

It should be noted that, in this embodiment, the UE may be a device that has a wireless network access function and can perform data exchange with a network device such as a smartphone or a computer.

302. The terminal device UE receives service mode information sent by the network device, where the service mode information is acquired by the network device according to the mapping relationship, and the service mode information is used to indicate the service mode of the network device.

The service mode information received by the UE is acquired by the network device according to the mapping relationship, and the service mode information is used to indicate at least one service mode.

303. The terminal device UE determines selection information according to the service mode information, where the selection information corresponds to a service mode in the service mode information.

In this embodiment, there may be multiple specific implementation manners in which the UE acquires the selection information according to the service mode information. For example, as shown in FIG. 3b, a smartphone may display, on a touchscreen of the smartphone, a service mode represented by service mode information and fee information corresponding to the service mode. In addition, multiple information controls may be displayed on the touchscreen to receive a trigger input by a user. When one of the information controls is triggered, it indicates that the user selects a service mode corresponding to the information control. The smartphone may generate selection information according to the service mode selected by the user, and add to the selection information a character string that is used to identify the service mode selected by the user, so that the network device modifies, after receiving the selection information sent by the UE, a configuration of the network device according to the service mode selected by the user.

304. The terminal device UE modifies a configuration of the terminal device according to the determined service mode in the selection information, and sends the selection information to the network device, so that the network device modifies a configuration according to the selection information.

For example, a current remaining electricity amount of a smartphone is 800 mA, and a target electricity amount value is 500 mA, so a difference is 300 mA. A service mode corresponding to selection information is a service mode x, and then the smartphone selects a transmit power that corresponds to the service mode x and is prestored in the smartphone. For example, during a process of performing service data exchange by the smartphone, an original transmit power is 2 mW, and then the smartphone determines, according to the selection information, that a transmit power of the smartphone in the service mode x is 1 mW, and then a maximum transmit power for the smartphone to perform data exchange in the service mode x does not exceed 1 mW.

As well known by a person skilled in the art, when a transmit power of a UE is relatively low, a base station may receive data by using multiple antennas, and perform processing such as beamforming and the like on the received data, thereby ensuring quality of data transmitted by the UE. That is, when the quality of the data transmitted by the UE is relatively stable, more antennas enabled by the base station when receiving data indicates a lower required transmit power of the UE. Therefore, in this embodiment, a network device modifies a configuration to increase the number of enabled antennas, thereby reducing the required transmit power of the UE. A lower required transmit power of the UE indicates lower required energy consumption of the UE for performing service data exchange, thereby increasing running time of the UE and improving user experience.

Further optionally, based on the method for adjusting a network configuration shown in FIG. 3a, the present invention may further include a solution shown in FIG. 4a.

401. Send requirement information to a network device.

The requirement information includes electricity-saving request information of a UE or a maximum transmit power of the UE, so that the network device acquires a mapping relationship corresponding to the requirement information, where the mapping relationship is a correspondence between requirement information and a service mode.

Further, the electricity-saving request information includes electricity amount information of the UE, and the electricity amount information corresponds to at least one mapping relationship, so that the network device determines a mapping relationship corresponding to the electricity amount information, and acquires a service mode according to the mapping relationship corresponding to the electricity amount information.

402. Receive service mode information sent by the network device.

The service mode information is acquired by the network device according to the mapping relationship, and the service mode information is used to indicate at least one service mode.

403. Acquire selection information according to the service mode information.

The selection information corresponds to a service mode in the service mode information.

404. Modify a configuration of the terminal device according to a service mode corresponding to the selection information, and send the selection information to the network device.

In this way, the network device modifies a configuration on a network side according to the service mode corresponding to the selection information.

Optionally, in this embodiment, 404 may include:
404a. Determine a transmit power corresponding to the service mode corresponding to the selection information so that data is sent to the network device based on the transmit power corresponding to the service mode, and send the selection information to the network device.

In this embodiment, a transmit power specified in each service mode may be prestored in the UE, as shown in Table 2.

**Table 2**

| **Service Mode** | **Transmit Power** |
|---|---|
| Service mode 2 | 1.00 mW |
| Service mode 3 | 0.50 mW |

The UE may acquire the transmit power of the service mode corresponding to the selection information, and use the acquired transmit power as an upper power limit for transmitting a radio wave by the UE, so that a transmit power of the UE during a running process does not exceed the acquired transmit power. For example, selection information corresponds to the service mode 2, and a transmit power acquired by a smartphone is 1.00 mW; then a transmit power of the smartphone during a running process does not exceed 1.00 mW.

Alternatively, as shown in FIG. 4b, 404 includes:
404b. Send data to the network device based on the maximum transmit power of the UE, and send the selection information to the network device.

As well known by a person skilled in the art, when a transmit power of a UE is relatively low, a base station may receive data by using multiple antennas, and perform processing such as beamforming and the like on the received data, thereby ensuring quality of data transmitted by the UE. That is, when the quality of the data transmitted by the UE is relatively stable, more antennas enabled by the base station when receiving data indicates a lower required transmit power of the UE. Therefore, in this embodiment, a network device modifies a configuration to increase the number of enabled antennas, thereby reducing the required transmit power of the UE. A lower required transmit power of the UE indicates lower required energy consumption of the UE for performing service data exchange, thereby increasing running time of the UE and improving user experience.

According to another aspect, an embodiment of the present invention provides a network device. As shown in FIG. 5a, a network device 5a includes:
A first receiving module 51 is configured to receive information sent by a terminal device UE, where the information includes requirement information and selection information, and the requirement information includes electricity-saving request information of the UE or a maximum transmit power of the UE.

Further, the first receiving module 51 is configured to receive the selection information sent by the UE.

An analyzing module 52 is configured to search for a mapping relationship between a service mode and the requirement information, and determine at least one service mode of the network device according to the mapping relationship.

Optionally, as shown in FIG. 5b, the analyzing module 52 includes:
Electricity amount information of the UE includes a target electricity amount value of the UE.

An electricity amount analyzing unit 521 is configured to determine a mapping relationship corresponding to the electricity amount information.

A service mode acquiring unit 522 is configured to determine the at least one service mode of the network device according to the mapping relationship corresponding to the electricity amount information.

Optionally in parallel, as shown in FIG. 5c, the analyzing module 52 includes:
a power analyzing unit 524, configured to determine a numeric interval in which the maximum transmit power of the UE is located, where the numeric interval corresponds to at least one mapping relationship.

Then the service mode acquiring unit 522 may further be or may be configured to determine the at least one service mode of the network device according to the mapping relationship corresponding to the numeric interval.

A first sending module 54 is configured to send service mode information of the determined service mode of the network device to the UE, so that the UE determines the selection information according to the received service mode information, where the service mode information is used to indicate the service mode of the network device.

A first configuration modifying module 55 is configured to obtain the selection information sent by the UE, and modify a configuration of the network device according to the determined service mode in the selection information, where the selection information corresponds to a service mode in the service mode information.

As described in the foregoing, the first receiving module 51 is further configured to receive the selection information sent by the UE, so that the first configuration modifying module 55 obtains the selection information sent by the UE. In practice, the selection information may also be obtained directly.

Optionally, as shown in FIG. 5d, the first configuration modifying module 55 includes:
an antenna number analyzing unit 551, configured to obtain the selection information sent by the UE, and determine, according to the service mode corresponding to the selection information, the number of antennas that is specified in the service mode; and
an antenna enabling unit 552, configured to: according to the number of antennas, enable a corresponding number of antennas, and receive, by using the enabled antenna, data sent by the UE.

Further optionally, in this embodiment, the antenna number analyzing unit 551 is further configured to detect whether a currently required transmit power of the UE is greater than the maximum transmit power; and
the antenna enabling unit 552 is further configured to: if the currently required transmit power of the UE is greater than the maximum transmit power, add a preset number of antennas, and use a total number of antennas obtained after the preset number of antennas are added, as the number of antennas that is specified in the service mode.

As well known by a person skilled in the art, when a transmit power of a UE is relatively low, a base station may receive data by using multiple antennas, and perform processing such as beamforming and the like on the received data, thereby ensuring quality of data transmitted by the UE. That is, when the quality of the data transmitted by the UE is relatively stable, more antennas enabled by the base station when receiving data indicates a lower required transmit power of the UE. Therefore, in this embodiment, a network device modifies a configuration to increase the number of enabled antennas, thereby reducing the required transmit power of the UE. A lower required transmit power of the UE indicates lower required energy consumption of the UE for performing service data exchange, thereby increasing running time of the UE and improving user experience.

In parallel, an embodiment of the present invention provides a terminal device. As shown in FIG. 6, a terminal device 60 includes:
A second sending module 61 is configured to send requirement information to a network device.

The requirement information includes electricity-saving request information of a UE or a maximum transmit power of the UE, so that the network device acquires a mapping relationship corresponding to the requirement information, where the mapping relationship is a correspondence between requirement information and a service mode.

Further, the electricity-saving request information includes electricity amount information of the UE, and the electricity amount information corresponds to at least one mapping relationship, so that the network device determines a mapping relationship corresponding to the electricity amount information, and acquires a service mode according to the mapping relationship corresponding to the electricity amount information.

A second receiving module 62 is configured to receive service mode information sent by the network device.

The service mode information is acquired by the network device according to the mapping relationship, and the service mode information is used to indicate at least one service mode.

A selecting module 63 is configured to acquire selection information according to the service mode information.

The selection information corresponds to a service mode in the service mode information.

A second configuration modifying module 64 is configured to modify a configuration of the terminal device according to a service mode corresponding to the selection information, and send the selection information to the network device, so that the network device modifies a configuration on a network side according to the service mode corresponding to the selection information.

Optionally, the second configuration modifying module 64 includes:
a power analyzing unit 641, configured to determine a transmit power corresponding to the service mode corresponding to the selection information, so that the terminal device sends data to the network device based on the transmit power corresponding to the service mode, or sends data to the network device based on the maximum transmit power of the UE.

As well known by a person skilled in the art, when a transmit power of a UE is relatively low, a base station may receive data by using multiple antennas, and perform processing such as beamforming and the like on the received data, thereby ensuring quality of data transmitted by the UE. That is, when the quality of the data transmitted by the UE is relatively stable, more antennas enabled by the base station when receiving data indicates a lower required transmit power of the UE. Therefore, in this embodiment, a network device modifies a configuration to increase the number of enabled antennas, thereby reducing the required transmit power of the UE. A lower required transmit power of the UE indicates lower required energy consumption of the UE for performing service data exchange, thereby increasing running time of the UE and improving user experience.

According to still another aspect, an embodiment of the present invention provides a system for adjusting a network configuration. As shown in FIG. 7, the system includes a network device 71 and a terminal device 72.

The terminal device 72 sends requirement information to the network device 71, where the requirement information includes electricity-saving request information of the terminal device 72 or a maximum transmit power of the terminal device 72, so that the network device 71 acquires a mapping relationship corresponding to the requirement information, and the mapping relationship is a correspondence between requirement information and a service mode.

The network device 71 receives the requirement information sent by the terminal device 72.

The network device 71 acquires the mapping relationship corresponding to the requirement information, where the mapping relationship is a correspondence between requirement information and a service mode.

Then the network device 71 acquires service mode information according to the mapping relationship, and sends the service mode information to the terminal device 72.

The terminal device 72 receives the service mode information sent by the network device 71, where the service mode information is acquired by the network device 71 according to the mapping relationship, and the service mode information is used to indicate at least one service mode.

The terminal device 72 acquires selection information according to the service mode information, where the selection information corresponds to a service mode in the service mode information.

Then the terminal device 72 modifies a configuration of the terminal device 72 according to a service mode corresponding to the selection information, and sends the selection information to the network device 71.

The network device 71 receives the selection information sent by the terminal device 72, and modifies a configuration of the network device 71 according to the service mode corresponding to the selection information, where the selection information corresponds to a service mode in the service mode information.

As well known by a person skilled in the art, when a transmit power of a UE is relatively low, a base station may receive data by using multiple antennas, and perform processing such as beamforming and the like on the received data, thereby ensuring quality of data transmitted by the UE. That is, when the quality of the data transmitted by the UE is relatively stable, more antennas enabled by the base station when receiving data indicates a lower required transmit power of the UE. Therefore, in this embodiment, a network device modifies a configuration to increase the number of enabled antennas, thereby reducing the required transmit power of the UE. A lower required transmit power of the UE indicates lower required energy consumption of the UE for performing service data exchange, thereby increasing running time of the UE and improving user experience.

The embodiments in this specification are all described in a progressive manner, for same or similar parts in the embodiments, refer to these embodiments, and each embodiment focuses on a difference from other embodiments. Especially, a device embodiment is basically similar to a method embodiment, and therefore is described briefly; for related parts, refer to some descriptions in the method embodiment.

An embodiment of the present invention further provides an apparatus that implements steps and methods in the foregoing method embodiments. FIG. 8 shows an embodiment of an apparatus, and in this embodiment, a device 80 includes a transmit circuit 802, a receive circuit 803, a processor 806, a memory 807, and an antenna 801. The processor 806 is configured to control the device 80, and the processor 806 may be referred to as a central processing unit CPU. The memory 807 may include a read-only memory and a random access memory, and provides an instruction and data to the processor 806. A part of the memory 807 may further include a non-volatile random access memory (NVRAM). In a specific application, the memory 807 may further include a carrier that accommodates a transmit circuit 802 and the receive circuit 803, so that the device 80 transmits data to and receives data from a device between the device 80 and a remote location. The transmit circuit 802 and the receive circuit 803 may be coupled to the antenna 801. Components of the device 80 are coupled together by using a bus system 8100, where in addition to a data bus, the bus system 8100 includes a power bus, a control bus, and a status signal bus. However, for clear description, various types of buses in the figure are marked as the bus system 8100.

The device 80 may be built into or may be a wireless communications device such as a mobile phone. An embodiment of the present invention provides another terminal device, which can implement methods executed by the foregoing terminal device. In the foregoing embodiment of the terminal device, a second sending module is implemented by using the transmit circuit 802 in this embodiment, or the second sending module is a part of the transmit circuit 802. A second receiving module is implemented by using the transmit circuit 802 in this embodiment, or the second receiving module is a part of the transmit circuit 802. A selecting module and a second configuration modifying module are on the processor 806. It may be considered that the processor 806 is configured to implement the following: determining selection information according to service mode information, where the selection information corresponds to a service mode in the service mode information; and modifying a configuration of the terminal device according to the determined service mode in the selection information, and sending the selection information to the network device, so that the network device modifies a configuration according to the selection information.

The foregoing methods disclosed by the embodiments of the present invention may be applied to the foregoing terminal device, and are completed by the foregoing hardware entity that has a processing capability The processor 806 may be an integrated circuit chip and has a signal processing capability. During an implementation process, the steps in the foregoing methods may be completed by using an integrated logic circuit of hardware in the processor 806 or an instruction in a form of hardware running software. Configured to execute the methods disclosed in the embodiments of the present invention, the foregoing processor may be a general purpose processor, a digital signal processor (DSP), an application-specific integrated circuit (ASIC), a field programmable gate array (FPGA) or another programmable logic component, a discrete gate or a transistor logic component, or a discrete hardware assembly, which can implement or perform the methods, the steps, and the logical block diagrams disclosed in the embodiments of the present invention. A general purpose processor may be a microprocessor or the processor may also be any conventional processor, decoder, and the like. Steps of the methods disclosed with reference to the embodiments of the present invention may be directly executed and completed by a hardware decoding processor, or may be executed and completed by using a combination of hardware and software modules in the decoding processor. The software module may be located in a mature storage medium in the field, such as a random access memory, a flash memory, a read-only memory, a programmable read-only memory, an electrically-erasable programmable memory, or a register. The storage medium is located in the memory 807, and the processor reads information in the memory 807 and completes the steps in the foregoing methods in combination with hardware of the processor.

Further, an embodiment of the present invention further provides another network device. FIG. 9 shows an embodiment of an apparatus, and in this embodiment, a device 90 includes a transmit circuit 902, a receive circuit 903, a power controller 904, a processor 906, a memory 907, and an antenna 901. The processor 906 is configured to control the device 90, and the processor 906 may be referred to as a central processing unit CPU. The memory 907 may include a read-only memory and a random access memory, and provides an instruction and data to the processing unit 906. A part of the memory 907 may further include a non-volatile random access memory (NVRAM). In a specific application, the memory 907 may further include a carrier that accommodates the transmit circuit 902 and the receive circuit 903, so that the device 90 transmits data to and receives data from a device between the device 90 and a remote location. The transmit circuit 902 and the receive circuit 903 may be coupled to the antenna 901. Components of the device 90 are coupled together by using a bus system 9100, where in addition to a data bus, the bus system 9100 includes a power bus, a control bus, and a status signal bus. However, for clear description, various types of buses in the figure are marked as the bus system 9100.

The device 90 may be the another embodiment of the network device in the embodiments of the present invention, and can implement methods executed by the foregoing network device. For the foregoing embodiment of the network device, a first receiving module is located in the receive circuit 903, and the receive circuit 903 receives, by using the antenna 901, information sent by a terminal device UE, where the information includes requirement information, selection information, and other information. An analyzing unit and a first configuration modifying module are located in the processor 906, or executes some functions of the processor 906. The processor 906 searches for a mapping relationship between a service mode and the requirement information, and determines at least one service mode of the network device according to the mapping relationship. In addition, the processor 906 may obtain the selection information sent by the UE, and modify a configuration of the network device according to the determined service mode in the selection information, where the selection information corresponds to a service mode in the service mode information. A first sending module is located in the transmit circuit 902, or is implemented by the transmit circuit 902. The transmit circuit 902 sends, by using the antenna 901, service mode information of the determined service mode of the network device to the UE, so that the UE determines the selection information according to the received service mode information, where the service mode information is used to indicate the service mode of the network device.

Further, in this embodiment, the power controller 904 is further included, and the power controller 904 implements the foregoing power analyzing unit. The power controller 904 determines a numeric interval in which a maximum transmit power of the UE is located, and implements power control, enabling, and disabling of an antenna under the control of the processor 906.

The methods disclosed by the foregoing embodiments of the present invention may be applied to the foregoing network device and completed by the foregoing hardware entity that has a processing capability The processor 906 may be an integrated circuit chip and has a signal processing capability. During an implementation process, the steps in the foregoing methods may be completed by using an integrated logic circuit of hardware in the processor 906 or an instruction in a form of hardware running software. Configured to execute the methods disclosed in the embodiments of the present invention, the foregoing processor may be a general purpose processor, a digital signal processor (DSP), an application-specific integrated circuit (ASIC), a field programmable gate array (FPGA) or another programmable logic component, a discrete gate or a transistor logic component, or a discrete hardware assembly, which can implement or perform the methods, the steps, and the logical block diagrams disclosed in the embodiments of the present invention. A general purpose processor may be a microprocessor or the processor may also be any conventional processor, decoder, and the like. Steps of the methods disclosed with reference to the embodiments of the present invention may be directly executed and completed by a hardware decoding processor, or may be executed and completed by using a combination of hardware and software modules in the decoding processor. The software module may be located in a mature storage medium in the field, such as a random access memory, a flash memory, a read-only memory, a programmable read-only memory, an electrically-erasable programmable memory, or a register. The storage medium is located in the memory 907, and the processor reads information in the memory 907 and completes the steps in the foregoing methods in combination with hardware of the processor.

A person of ordinary skill in the art may understand that all or some of the procedures of the methods in the foregoing embodiments may be implemented by a computer program instructing related hardware. The program may be stored in a computer readable storage medium. When the program runs, the procedures of the methods in the embodiments are performed. The foregoing storage medium may include: a magnetic disk, an optical disc, a read-only memory (Read-Only Memory, ROM), or a random access memory (Random Access Memory, RAM).

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for modifying a network configuration, comprising:
receiving (101), by a network device, requirement information sent by a terminal device , wherein the requirement information comprises electricity-saving request information of the terminal device or a maximum transmit power of the terminal device;
searching (102), by the network device, for a mapping relationship between a service mode and the requirement information, and determining at least one service mode of the network device according to the mapping relationship;
sending (103), by the network device, service mode information of the determined at least one service mode of the network device to the terminal device, so that the terminal device determines selection information according to the received service mode information, wherein the service mode information is used to indicate the at least one service mode of the network device; and
receiving (104), by the network device, the selection information sent by the terminal device, and modifying a configuration of the network device according to the determined service mode in the selection information, wherein the selection information corresponds to a service mode in the service mode information.

2. The method for modifying a network configuration according to claim 1, wherein the electricity-saving request information comprises electricity amount information of the terminal device, and the searching, by the network device, for a mapping relationship between a service mode and the requirement information comprises:
determining, by the network device, a mapping relationship between the electricity amount information and the service mode; and
the determining at least one service mode of the network device according to the mapping relationship comprises: determining, by the network device, the at least one service mode of the network device according to the mapping relationship corresponding to the electricity amount information.

3. The method for modifying a network configuration according to claim 1, wherein the requirement information comprises the maximum transmit power of the terminal device, and the searching, by the network device, for a mapping relationship between a service mode and the requirement information comprises:
determining, by the network device, a numeric interval in which the maximum transmit power of the terminal device is located, wherein the numeric interval corresponds to at least one mapping relationship; and
the determining at least one service mode of the network device according to the mapping relationship comprises: determining the at least one service mode of the network device according to the at least one mapping relationship corresponding to the numeric interval.

4. The method for modifying a network configuration according to any one of claims 1 to 3, wherein the modifying a configuration of the network device according to the determined service mode in the selection information comprises:
determining, by the network device according to the service mode corresponding to the selection information, the number of antennas that is specified in the service mode; and
enabling, by the network device, a corresponding number of antennas according to the number of antennas, and receiving, by using the one or more enabled antennas, data sent by the terminal device.

5. The method for modifying a network configuration according to claim 4, wherein the determining the number of antennas that is specified in the service mode comprises:
detecting whether a currently required transmit power of the terminal device is greater than the maximum transmit power; and
if the currently required transmit power of the terminal device is greater than the maximum transmit power, adding a preset number of antennas, and using a total number of antennas obtained after the preset number of antennas are added, as the number of antennas that is specified in the service mode.

6. A method for modifying a network configuration, comprising:
sending (301), by a terminal device, demand information to a network device, wherein the demand information comprises electricity saving request information of the terminal device or a maximum transmit power of the terminal device, so that the network device searches for a mapping relationship between the demand information and a service mode, and determines at least one service mode of the network device according to the mapping relationship;
receiving (302), by the terminal device, service mode information sent by the network device, wherein the service mode information is acquired by the network device according to the mapping relationship, and the service mode information is used to indicate the at least one service mode of the network device;
determining (303), by the terminal device, selection information according to the service mode information, wherein the selection information corresponds to a service mode in the service mode information; and
modifying (304), by the terminal device, a configuration of the terminal device according to the determined service mode in the selection information, and sending the selection information to the network device, so that the network device modifies a configuration according to the selection information.

7. The method for modifying a network configuration according to claim 6, wherein the electricity-saving request information comprises electricity amount information of the terminal device, and
the sending, by a terminal device, requirement information to a network device comprises: sending, by the terminal device, the electricity amount information of the terminal device to the network device, wherein the electricity amount information has at least one mapping relationship with a service mode, so that the network device determines a mapping relationship between the electricity amount information and the service mode, and acquires the service mode according to the mapping relationship corresponding to the electricity amount information.

8. The method for modifying a network configuration according to any one of claims 6 to 7, wherein the modifying, by the terminal device, a configuration of the terminal device according to the determined service mode in the selection information comprises:
determining, by the terminal device, a transmit power corresponding to the determines service mode in the selection information, and sending data to the network device according to the transmit power corresponding to the service mode; or
sending, by the terminal device, data to the network device by using the maximum transmit power.

9. A network device, comprising:
a receiving module (51), configured to receive information sent by a terminal device, wherein the information comprises requirement information and selection information, and the requirement information comprises electricity-saving request information of the terminal device or a maximum transmit power of the terminal device;
an analyzing module (52), configured to search for a mapping relationship between a service mode and the requirement information, and determine at least one service mode of the network device according to the mapping relationship;
a sending module (54), configured to send service mode information of the determined at least one service mode of the network device to the terminal device, so that the terminal device determines the selection information according to the received service mode information, wherein the service mode information is used to indicate the at least one service mode of the network device; and
a configuration modifying module (55), configured to obtain the selection information sent by the terminal device, and modify a configuration of the network device according to the determined service mode in the selection information, wherein the selection information corresponds to a service mode in the service mode information.

10. The network device according to claim 9, wherein the electricity-saving request information comprises electricity amount information of the terminal device, and the analyzing module (52) comprises:
an electricity amount analyzing unit (521), configured to obtain a mapping relationship between the electricity amount information and the service mode; and
a service mode acquiring unit (522), configured to determine the at least one service mode of the network device according to the mapping relationship corresponding to the electricity amount information.

11. The network device according to claim 9, wherein the requirement information comprises the maximum transmit power of the terminal device, and the analyzing module (52) comprises:
a power analyzing unit (524), configured to determine a numeric interval in which the maximum transmit power of the terminal device is located, wherein the numeric interval corresponds to at least one mapping relationship; and
a service mode acquiring unit (522), configured to determine the at least one service mode of the network device according to the at least one mapping relationship corresponding to the numeric interval.

12. The network device according to claim 10 or 11, wherein the configuration modifying module (55) comprises:
an antenna number analyzing unit (551), configured to obtain the selection information sent by the terminal device, and determine, according to the service mode corresponding to the selection information, the number of antennas that is specified in the service mode; and
an antenna enabling unit (552), configured to: according to the number of antennas, enable a corresponding number of antennas to modify an antenna enabling configuration of the network device; and receive, by using the enabled antenna, data sent by the terminal device.

13. The network device according to claim 12, wherein the antenna number analyzing unit is further configured to detect whether a currently required transmit power of the terminal device is greater than the maximum transmit power; and
the antenna enabling unit (552) is further configured to: if the currently required transmit power of the terminal device is greater than the maximum transmit power, add a preset number of antennas, and use a total number of antennas obtained after the preset number of antennas are added, as the number of antennas that is specified in the service mode.

14. A terminal device, comprising:
a sending module (61), configured to send requirement information to a network device, wherein the requirement information comprises electricity-saving request information of the terminal device or a maximum transmit power of the terminal device, so that the network device acquires a mapping relationship between requirement information and a service mode;
a receiving module (62), configured to receive service mode information sent by the network device, wherein the service mode information is acquired by the network device according to the mapping relationship, and the service mode information is used to indicate a service mode;
a selecting module (63), configured to determine selection information according to the service mode information, wherein the selection information corresponds to a service mode in the service mode information; and
a configuration modifying module (64), configured to modify a configuration of the terminal device according to the determined service mode in the selection information, and send the selection information to the network device, so that the network device modifies a configuration according to the selection information.

15. The terminal device according to claim 14, wherein the electricity-saving request information sent by the sending module (61) comprises electricity amount information of the terminal device, wherein the electricity amount information has at least one mapping relationship with a service mode, so that the network device determines the mapping relationship between the electricity amount information and the service mode, and acquires the service mode according to the mapping relationship corresponding to the electricity amount information.

16. The terminal device according to claim 14 or 15, wherein the configuration modifying module (64) comprises:
a power analyzing unit (641), configured to determine a transmit power corresponding to the determined service mode in the selection information, so that the sending module (61) sends data to the network device according to the transmit power corresponding to the service mode.

17. The terminal device according to claim 14 or 15, wherein the configuration modifying module (64) comprises:
a power analyzing unit (641), configured to send data to the network device according to the maximum transmit power of the terminal device.

## Patentansprüche

1. Verfahren zum Modifizieren einer Netzwerkkonfiguration, umfassend:
Empfangen (101), durch eine Netzwerkvorrichtung, von Anforderungsinformationen, gesendet von einer Endgerätvorrichtung, wobei die Anforderungsinformationen Anfrageinformationen zum Sparen von Elektrizität der Endgerätvorrichtung oder eine maximale Übertragungsleistung der Endgerätvorrichtung umfassen;
Suchen (102), durch die Netzwerkvorrichtung, nach einer Abbildungsbeziehung zwischen einem Dienstmodus und den Anforderungsinformationen und Bestimmen mindestens eines Dienstmodus der Netzwerkvorrichtung gemäß der Abbildung sbeziehung;
Senden (103), durch die Netzwerkvorrichtung, von Dienstmodusinformationen des bestimmten mindestens einen Dienstmodus der Netzwerkvorrichtung an die Endgerätvorrichtung, so dass die Endgerätvorrichtung Auswahlinformationen gemäß den empfangenen Dienstmodusinformationen bestimmt, wobei die Dienstmodusinformationen zum Angeben des mindestens einen Dienstmodus der Netzwerkvorrichtung verwendet werden; und
Empfangen (104), durch die Netzwerkvorrichtung, der von der Endgerätvorrichtung gesendeten Auswahlinformationen und Modifizieren einer Konfiguration der Netzwerkvorrichtung gemäß dem bestimmten Dienstmodus in den Auswahlinformationen, wobei die Auswahlinformationen mit einem Dienstmodus in den Dienstmodusinformationen korrespondieren.

2. Verfahren zum Modifizieren einer Netzwerkkonfiguration nach Anspruch 1, wobei die Anfrageinformationen zum Sparen von Elektrizität Elektrizitätsmengeninformationen der Endgerätvorrichtung umfassen und das Suchen, durch die Netzwerkvorrichtung, nach einer Abbildungsbeziehung zwischen einem Dienstmodus und den Anforderungsinformationen umfasst:
Bestimmen, durch die Netzwerkvorrichtung, einer Abbildungsbeziehung zwischen den Elektrizitätsmengeninformationen und dem Dienstmodus; und
das Bestimmen mindestens eines Dienstmodus der Netzwerkvorrichtung gemäß der Abbildungsbeziehung umfasst: Bestimmen, durch die Netzwerkvorrichtung, des mindestens einen Dienstmodus der Netzwerkvorrichtung gemäß der Abbildungsbeziehung korrespondierend mit den Elektrizitätsmengeninformationen.

3. Verfahren zum Modifizieren einer Netzwerkkonfiguration nach Anspruch 1, wobei die Anforderungsinformationen die maximale Übertragungsleistung der Endgerätvorrichtung umfassen und das Suchen, durch die Netzwerkvorrichtung, nach einer Abbildungsbeziehung zwischen einem Dienstmodus und den Anforderungsinformationen umfasst:
Bestimmen, durch die Netzwerkvorrichtung, eines numerischen Intervalls, in dem die maximale Übertragungsleistung der Endgerätvorrichtung angeordnet ist, wobei das numerische Intervall mit mindestens einer Abbildungsbeziehung korrespondiert; und
das Bestimmen mindestens eines Dienstmodus der Netzwerkvorrichtung gemäß der Abbildungsbeziehung umfasst: Bestimmen des mindestens einen Dienstmodus der Netzwerkvorrichtung gemäß der mindestens einen Abbildungsbeziehung korrespondierend mit dem numerischen Intervall.

4. Verfahren zum Modifizieren einer Netzwerkkonfiguration nach einem der Ansprüche 1 bis 3, wobei das Modifizieren einer Konfiguration der Netzwerkvorrichtung gemäß dem bestimmten Dienstmodus in den Auswahlinformationen umfasst:
Bestimmen, durch die Netzwerkvorrichtung gemäß dem mit den Auswahlinformationen korrespondierenden Dienstmodus, der Anzahl von Antennen, die in dem Dienstmodus spezifiziert wird; und
Aktivieren, durch die Netzwerkvorrichtung, einer korrespondierenden Anzahl von Antennen gemäß der Anzahl von Antennen und Empfangen, unter Verwendung der einen oder mehreren aktivierten Antennen, von Daten, die von der Endgerätvorrichtung gesendet werden.

5. Verfahren zum Modifizieren einer Netzwerkkonfiguration nach Anspruch 4, wobei das Bestimmen der Anzahl von Antennen, die in dem Dienstmodus spezifiziert wird, umfasst:
Detektieren, ob eine gegenwärtig erforderliche Übertragungsleistung der Endgerätvorrichtung größer ist als die maximale Übertragungsleistung; und
wenn die gegenwärtig erforderliche Übertragungsleistung der Endgerätvorrichtung größer ist als die maximale Übertragungsleistung, Hinzufügen einer im Voraus eingestellten Anzahl von Antennen und Verwenden einer gesamten Anzahl von Antennen, die erhalten wird, nachdem die im Voraus eingestellte Anzahl von Antennen hinzugefügt wird, als die Anzahl von Antennen, die in dem Dienstmodus spezifiziert wird.

6. Verfahren zum Modifizieren einer Netzwerkkonfiguration, umfassend:
Senden (301), durch eine Endgerätvorrichtung, von Bedarfsinformationen an eine Netzwerkvorrichtung, wobei die Bedarfsinformationen Anfrageinformationen zum Sparen von Elektrizität der Endgerätvorrichtung oder eine maximale Übertragungsleistung der Endgerätvorrichtung umfassen, so dass die Netzwerkvorrichtung nach einer Abbildungsbeziehung zwischen den Bedarfsinformationen und einem Dienstmodus sucht und mindestens einen Dienstmodus der Netzwerkvorrichtung gemäß der Abbildungsbeziehung bestimmt;
Empfangen (302), durch die Endgerätvorrichtung, von Dienstmodusinformationen, gesendet durch die Netzwerkvorrichtung, wobei die Dienstmodusinformationen durch die Netzwerkvorrichtung gemäß der Abbildungsbeziehung erfasst werden und die Dienstmodusinformationen verwendet werden, den mindestens einen Dienstmodus der Netzwerkvorrichtung anzugeben;
Bestimmen (303), durch die Endgerätvorrichtung, von Auswahlinformationen gemäß den Dienstmodusinformationen, wobei die Auswahlinformationen mit einem Dienstmodus in den Dienstmodusinformationen korrespondieren; und
Modifizieren (304), durch die Endgerätvorrichtung, einer Konfiguration der Endgerätvorrichtung gemäß dem bestimmten Dienstmodus in den Auswahlinformationen und Senden der Auswahlinformationen an die Netzwerkvorrichtung, so dass die Netzwerkvorrichtung eine Konfiguration gemäß den Auswahlinformationen modifiziert.

7. Verfahren zum Modifizieren einer Netzwerkkonfiguration nach Anspruch 6, wobei die Anfrageinformationen zum Sparen von Elektrizität Elektrizitätsmengeninformationen der Endgerätvorrichtung umfassen, und
das Senden, durch eine Endgerätvorrichtung, von Anforderungsinformationen an eine Netzwerkvorrichtung umfasst: Senden, durch die Endgerätvorrichtung, der Elektrizitätsmengeninformationen der Endgerätvorrichtung an die Netzwerkvorrichtung, wobei die Elektrizitätsmengeninformationen mindestens eine Abbildungsbeziehung mit einem Dienstmodus aufweisen, so dass die Netzwerkvorrichtung eine Abbildungsbeziehung zwischen den Elektrizitätsmengeninformationen und dem Dienstmodus bestimmt und den Dienstmodus gemäß der Abbildungsbeziehung korrespondierend mit den Elektrizitätsmengeninformationen erfasst.

8. Verfahren zum Modifizieren einer Netzwerkkonfiguration nach einem der Ansprüche 6 bis 7, wobei das Modifizieren, durch die Endgerätvorrichtung, einer Konfiguration der Endgerätvorrichtung gemäß dem bestimmten Dienstmodus in den Auswahlinformationen umfasst:
Bestimmen, durch die Endgerätvorrichtung, einer Übertragungsleistung korrespondierend mit dem bestimmten Dienstmodus in den Auswahlinformationen und Senden von Daten an die Netzwerkvorrichtung gemäß der mit dem Dienstmodus korrespondierenden Übertragungsleistung; oder
Senden, durch die Endgerätvorrichtung, von Daten an die Netzwerkvorrichtung unter Verwendung der maximalen Übertragungsleistung.

9. Netzwerkvorrichtung, umfassend:
ein Empfangsmodul (51), konfiguriert zum Empfangen von Informationen, gesendet durch eine Endgerätvorrichtung, wobei die Informationen Anforderungsinformationen und Auswahlinformationen umfassen und die Anforderungsinformationen Anfrageinformationen zum Sparen von Elektrizität der Endgerätvorrichtung oder eine maximale Übertragungsleistung der Endgerätvorrichtung umfassen;
ein Analysemodul (52), konfiguriert zum Suchen nach einer Abbildungsbeziehung zwischen einem Dienstmodus und den Anforderungsinformationen und Bestimmen mindestens eines Dienstmodus der Netzwerkvorrichtung gemäß der Abbildung sbeziehung;
ein Sendemodul (54), konfiguriert zum Senden von Dienstmodusinformationen des bestimmten mindestens einen Dienstmodus der Netzwerkvorrichtung an die Endgerätvorrichtung, so dass die Endgerätvorrichtung die Auswahlinformationen gemäß den empfangenen Dienstmodusinformationen bestimmt, wobei die Dienstmodusinformationen verwendet werden, den mindestens einen Dienstmodus der Netzwerkvorrichtung anzugeben; und
ein Konfigurationsmodifikationsmodul (55), konfiguriert zum Erhalten der durch die Endgerätvorrichtung gesendeten Auswahlinformationen und Modifizieren einer Konfiguration der Netzwerkvorrichtung gemäß dem bestimmten Dienstmodus in den Auswahlinformationen, wobei die Auswahlinformationen mit einem Dienstmodus in den Dienstmodusinformationen korrespondieren.

10. Netzwerkvorrichtung nach Anspruch 9, wobei die Anfrageinformationen zum Sparen von Elektrizität Elektrizitätsmengeninformationen der Endgerätvorrichtung umfassen und das Analysemodul (52) umfasst:
eine Elektrizitätsmengen-Analyseeinheit (521), konfiguriert zum Erhalten einer Abbildungsbeziehung zwischen den Elektrizitätsmengeninformationen und dem Dienstmodus; und
eine Dienstmodus-Erfassungseinheit (522), konfiguriert zum Bestimmen des mindestens einen Dienstmodus der Netzwerkvorrichtung gemäß der mit den Elektrizitätsmengeninformationen korrespondierenden Abbildungsbeziehung.

11. Netzwerkvorrichtung nach Anspruch 9, wobei die Anforderungsinformationen die maximale Übertragungsleistung der Endgerätvorrichtung umfassen und das Analysemodul (52) umfasst:
eine Leistungsanalyseeinheit (524), konfiguriert zum Bestimmen eines numerischen Intervalls, in dem die maximale Übertragungsleistung der Endgerätvorrichtung angeordnet ist, wobei das numerische Intervall mit mindestens einer Abbildungsbeziehung korrespondiert; und
eine Dienstmodus-Erfassungseinheit (522), konfiguriert zum Bestimmen des mindestens einen Dienstmodus der Netzwerkvorrichtung gemäß der mindestens einen Abbildungsbeziehung, die mit dem numerischen Intervall korrespondiert.

12. Netzwerkvorrichtung nach Anspruch 10 oder 11, wobei das Konfigurationsmodifikationsmodul (55) umfasst:
eine Antennenanzahl-Analyseeinheit (551), konfiguriert zum Erhalten der durch die Endgerätvorrichtung gesendeten Auswahlinformationen und Bestimmen, gemäß dem mit den Auswahlinformationen korrespondierenden Dienstmodus, der Anzahl von Antennen, die in dem Dienstmodus spezifiziert wird; und
eine Antennenaktivierungseinheit (552), konfiguriert zum: Aktivieren, gemäß der Anzahl von Antennen, einer korrespondierenden Anzahl von Antennen zum Modifizieren einer Antennenaktivierungskonfiguration der Netzwerkvorrichtung;
und Empfangen, unter Verwendung der aktivierten Antenne, von Daten, die von der Endgerätvorrichtung gesendet werden.

13. Netzwerkvorrichtung nach Anspruch 12, wobei die Antennenanzahl-Analyseeinheit ferner konfiguriert ist, zu detektieren, ob eine gegenwärtig erforderliche Übertragungsleistung der Endgerätvorrichtung größer ist als die maximale Übertragungsleistung; und
die Antennenaktivierungseinheit (552) ferner konfiguriert ist zum: wenn die gegenwärtig erforderliche Übertragungsleistung der Endgerätvorrichtung größer ist als die maximale Übertragungsleistung, Hinzufügen einer im Voraus eingestellten Anzahl von Antennen und Verwenden einer gesamten Anzahl von Antennen, die erhalten wird, nachdem die im Voraus eingestellte Anzahl von Antennen hinzugefügt wird, als die Anzahl von Antennen, die in dem Dienstmodus spezifiziert wird.

14. Endgerätvorrichtung, umfassend:
ein Sendemodul (61), konfiguriert zum Senden von Anforderungsinformationen an eine Netzwerkvorrichtung, wobei die Anforderungsinformationen Anfrageinformationen zum Sparen von Elektrizität der Endgerätvorrichtung oder eine maximale Übertragungsleistung der Endgerätvorrichtung umfassen, so dass die Netzwerkvorrichtung eine Abbildungsbeziehung zwischen Anforderungsinformationen und einem Dienstmodus erfasst;
ein Empfangsmodul (62), konfiguriert zum Empfangen von Dienstmodusinformationen, gesendet durch die Netzwerkvorrichtung, wobei die Dienstmodusinformationen durch die Netzwerkvorrichtung gemäß der Abbildungsbeziehung erfasst werden und die Dienstmodusinformationen verwendet werden, einen Dienstmodus anzugeben;
ein Auswahlmodul (63), konfiguriert zum Bestimmen von Auswahlinformationen gemäß den Dienstmodusinformationen, wobei die Auswahlinformationen mit einem Dienstmodus in den Dienstmodusinformationen korrespondieren; und
ein Konfigurationsmodifikationsmodul (64), konfiguriert zum Modifizieren einer Konfiguration der Endgerätvorrichtung gemäß dem bestimmten Dienstmodus in den Auswahlinformationen und Senden der Auswahlinformationen an die Netzwerkvorrichtung, so dass die Netzwerkvorrichtung eine Konfiguration gemäß den Auswahlinformationen modifiziert.

15. Endgerätvorrichtung nach Anspruch 14, wobei die Anfrageinformationen zum Sparen von Elektrizität, gesendet durch das Sendemodul (61), Elektrizitätsmengeninformationen der Endgerätvorrichtung umfassen, wobei die Elektrizitätsmengeninformationen mindestens eine Abbildungsbeziehung mit einem Dienstmodus aufweisen, so dass die Netzwerkvorrichtung die Abbildungsbeziehung zwischen den Elektrizitätsmengeninformationen und dem Dienstmodus bestimmt und den Dienstmodus gemäß der mit den Elektrizitätsmengeninformationen korrespondierenden Abbildungsbeziehung erfasst.

16. Endgerätvorrichtung nach Anspruch 14 oder 15, wobei das Konfigurationsmodifikationsmodul (64) umfasst:
eine Leistungsanalyseeinheit (641), konfiguriert zum Bestimmen einer mit dem bestimmten Dienstmodus in den Auswahlinformationen korrespondierenden Übertragungsleistung, so dass das Sendemodul (61) Daten gemäß der mit dem Dienstmodus korrespondierenden Übertragungsleistung an die Netzwerkvorrichtung sendet.

17. Endgerätvorrichtung nach Anspruch 14 oder 15, wobei das Konfigurationsmodifikationsmodul (64) umfasst:
eine Leistungsanalyseeinheit (641), konfiguriert zum Senden von Daten an die Netzwerkvorrichtung gemäß der maximalen Übertragungsleistung der Endgerätvorrichtung.

## Revendications

1. Procédé de modification d'une configuration de réseau, consistant à :
recevoir (101) avec un dispositif de réseau des informations d'exigences envoyées par un dispositif de terminal, lesquelles informations d'exigences comprennent des informations de demande d'économie d'électricité du dispositif de terminal ou une puissance de transmission maximale du dispositif de terminal ;
rechercher (102) avec le dispositif de réseau une relation de mappage entre un mode de service et les informations d'exigences, et déterminer au moins un mode de service du dispositif de réseau en fonction de la relation de mappage ;
envoyer (103) avec le dispositif de réseau des informations de mode de service dudit au moins un mode de service déterminé du dispositif de réseau au dispositif de terminal de sorte que le dispositif de terminal détermine des informations de sélection en fonction des informations de mode de service reçues, les informations de mode de service étant utilisées pour indiquer ledit au moins un mode de service du dispositif de réseau ; et
recevoir (104) avec le dispositif de réseau les informations de sélection envoyées par le dispositif de terminal, et modifier une configuration du dispositif de réseau en fonction du mode de service déterminé dans les informations de sélection, lesquelles informations de sélection correspondent à un mode de service dans les informations de mode de service.

2. Procédé de modification d'une configuration de réseau selon la revendication 1, dans lequel les informations de demande d'économie d'électricité comprennent des informations de quantité d'électricité du dispositif de terminal, et la recherche avec le dispositif de réseau d'une relation de mappage entre un mode de service et les informations d'exigences consiste à :
déterminer avec le dispositif de réseau une relation de mappage entre les informations de quantité d'électricité et le mode de service ; et
la détermination d'au moins un mode de service du dispositif de réseau en fonction de la relation de mappage consiste à déterminer avec le dispositif de réseau ledit au moins un mode de service du dispositif de réseau en fonction de la relation de mappage correspondant aux informations de quantité d'électricité.

3. Procédé de modification d'une configuration de réseau selon la revendication 1, dans lequel les informations d'exigences comprennent la puissance de transmission maximale du dispositif de terminal et la recherche avec le dispositif de réseau d'une relation de mappage entre un mode de service et les informations d'exigences consiste à :
déterminer avec le dispositif de réseau un intervalle numérique dans lequel la puissance de transmission maximale du dispositif de terminal se situe, lequel intervalle numérique correspond à au moins une relation de mappage ; et
la détermination d'au moins un mode de service du dispositif de réseau en fonction de la relation de mappage consiste à déterminer ledit au moins un mode de service du dispositif de réseau en fonction de ladite au moins une relation de mappage correspondant à l'intervalle numérique.

4. Procédé de modification d'une configuration de réseau selon l'une quelconque des revendications 1 à 3, dans lequel la modification d'une configuration du dispositif de réseau en fonction du mode de service déterminé dans les informations de sélection consiste à :
déterminer avec le dispositif de réseau, en fonction du mode de service correspondant aux informations de sélection, le nombre d'antennes qui est spécifié dans le mode de service ; et
activer avec le dispositif de réseau un nombre correspondant d'antennes en fonction du nombre d'antennes, et recevoir, en utilisant la ou les antennes activées, des données envoyées par le dispositif de terminal.

5. Procédé de modification d'une configuration de réseau selon la revendication 4, dans lequel la détermination du nombre d'antennes spécifié dans le mode de service consiste à :
détecter si une puissance de transmission couramment requise du dispositif de terminal est supérieure à une puissance de transmission maximale ; et
si la puissance de transmission couramment requise du dispositif de terminal est supérieure à la puissance de transmission maximale, ajouter un nombre prédéfini d'antennes et utiliser un nombre total d'antennes obtenu après l'addition du nombre prédéfini d'antennes en tant que nombre d'antennes spécifié dans le mode de service.

6. Procédé de modification d'une configuration de réseau consistant à :
envoyer (301) avec un dispositif de terminal des informations de demande à un dispositif de réseau, lesquelles informations de demande comprennent des informations de demande d'économie d'électricité du dispositif de terminal ou une puissance de transmission maximale du dispositif de terminal de sorte que le dispositif de réseau recherche une relation de mappage entre les informations de demande et un mode de service, et détermine au moins un mode de service du dispositif de réseau en fonction de la relation de mappage ;
recevoir (302) avec le dispositif de terminal des informations de mode de service envoyées par le dispositif de réseau, lesquelles informations de mode de service sont acquises par le dispositif de réseau en fonction de la relation de mappage, et les informations de mode de service sont utilisées pour indiquer ledit au moins un mode de service du dispositif de réseau ;
déterminer (303) avec le dispositif de terminal des informations de sélection en fonction des informations de mode de service, lesquelles informations de sélection correspondent à un mode de service dans les informations de mode de service ; et
modifier (304) avec le dispositif de terminal une configuration du dispositif de terminal en fonction du mode de service déterminé dans les informations de sélection, et envoyer les informations de sélection au dispositif de réseau de sorte que le dispositif de réseau modifie une configuration en fonction des informations de sélection.

7. Procédé de modification d'une configuration de réseau selon la revendication 6, dans lequel les informations de demande d'économie d'électricité comprennent des informations de quantité d'électricité du dispositif de terminal, et l'envoi avec un dispositif de terminal d'informations d'exigences à un dispositif de réseau consiste à envoyer, avec le dispositif de terminal, les informations de quantité d'électricité du dispositif de terminal au dispositif de réseau, lesquelles informations de quantité d'électricité comprennent au moins une relation de mappage avec un mode de service de sorte que le dispositif de réseau détermine une relation de mappage entre les informations de quantité d'électricité et le mode de service, et acquière le mode de service en fonction de la relation de mappage correspondant aux informations de quantité d'électricité.

8. Procédé de modification d'une configuration de réseau selon l'une quelconque des revendications 6 à 7, dans lequel la modification avec le dispositif de terminal d'une configuration du dispositif de terminal en fonction du mode de service déterminé dans les informations de sélection consiste à :
déterminer avec le dispositif de terminal une puissance de transmission correspondant au mode de service déterminé dans les informations de sélection, et envoyer des données au dispositif de réseau en fonction de la puissance de transmission correspondant au mode de service ; ou
envoyer avec le dispositif de terminal des données au dispositif de réseau en utilisant la puissance de transmission maximale.

9. Dispositif de réseau comprenant :
un module de réception (51) conçu pour recevoir des informations envoyées par un dispositif de terminal, lesquelles informations comprennent des informations d'exigences et des informations de sélection, et les informations d'exigences comprennent des informations de demande d'économie d'électricité du dispositif de terminal ou une puissance de transmission maximale du dispositif de terminal ;
un module d'analyse (52) conçu pour rechercher une relation de mappage entre un mode de service et les informations d'exigences, et déterminer au moins un mode de service du dispositif de réseau en fonction de la relation de mappage ;
un module d'envoi (54) conçu pour envoyer des informations de mode de service dudit au moins un mode de service déterminé du dispositif de réseau au dispositif de terminal de sorte que le dispositif de terminal détermine des informations de sélection en fonction des informations de mode de service reçues, les informations de mode de service étant utilisées pour indiquer ledit au moins un mode de service du dispositif de réseau ; et
un module de modification de configuration (55) conçu pour obtenir les informations de sélection envoyées par le dispositif de terminal, et modifier une configuration du dispositif de réseau en fonction du mode de service déterminé dans les informations de sélection, lesquelles informations de sélection correspondent à un mode de service dans les informations de mode de service.

10. Dispositif de réseau selon la revendication 9, dans lequel les informations de demande d'économie d'électricité comprennent des informations de quantité d'électricité du dispositif de terminal, et le module d'analyse (52) comprend :
une unité d'analyse de quantité d'électricité (521) conçue pour obtenir une relation de mappage entre les informations de quantité d'électricité et le mode de service ; et
une unité d'acquisition de mode de service (522) conçue pour déterminer ledit au moins un mode de service du dispositif de réseau en fonction de la relation de mappage correspondant aux informations de quantité d'électricité.

11. Dispositif de réseau selon la revendication 9, dans lequel les informations d'exigences comprennent la puissance de transmission maximale du dispositif de terminal, et le module d'analyse (52) comprend :
une unité d'analyse de puissance (524) conçue pour déterminer un intervalle numérique dans lequel la puissance de transmission maximale du dispositif de terminal se situe, lequel intervalle numérique correspond à au moins une relation de mappage ;
et
une unité d'acquisition de mode de service (522) conçue pour déterminer ledit au moins un mode de service du dispositif de réseau en fonction de ladite au moins une relation de mappage correspondant à l'intervalle numérique.

12. Dispositif de réseau selon la revendication 10 ou 11, dans lequel le module de modification de configuration (55) comprend :
une unité d'analyse de nombre d'antennes (551) conçue pour obtenir les informations de sélection envoyées par le dispositif de terminal et déterminer en fonction du mode de service correspondant aux informations de sélection, le nombre d'antennes qui est spécifié dans le mode de service ; et
une unité d'activation d'antenne (552) conçue pour, en fonction du nombre d'antennes, activer un nombre correspondant d'antennes pour modifier une configuration d'activation d'antenne du dispositif de réseau, et recevoir, en utilisant l'antenne activée, des données envoyées par le dispositif de terminal.

13. Dispositif de réseau selon la revendication 12, dans lequel l'unité d'analyse de nombre d'antennes est en outre conçue pour détecter si une puissance de transmission couramment requise du dispositif de terminal est supérieure à la puissance de transmission maximale, et l'unité d'activation d'antenne (552) est en outre conçue pour, si la puissance de transmission couramment requise du dispositif de terminal est supérieure à la puissance de transmission maximale, ajouter un nombre prédéfini d'antennes et utiliser un nombre total d'antennes obtenu après l'addition du nombre prédéfini d'antennes en tant que nombre d'antennes spécifié dans le mode de service.

14. Dispositif de terminal comprenant :
un module d'envoi (61) conçu pour envoyer des informations d'exigences à un dispositif de réseau, lesquelles informations d'exigences comprennent des informations de demande d'économie d'électricité du dispositif de terminal ou une puissance de transmission maximale du dispositif de terminal de sorte que le dispositif de réseau acquière une relation de mappage entre des informations de demande et un mode de service ;
un module de réception (62) conçu pour recevoir des informations de mode de service envoyées par le dispositif de réseau, lesquelles informations de mode de service sont acquises par le dispositif de réseau en fonction de la relation de mappage, et les informations de mode de service sont utilisées pour indiquer un mode de service ;
un module de sélection (63) conçu pour déterminer des informations de sélection en fonction des informations de mode de service, lesquelles informations de sélection correspondent à un mode de service dans les informations de mode de service ; et
un module de modification de configuration (64) conçu pour modifier une configuration du dispositif de terminal en fonction du mode de service déterminé dans les informations de sélection, et envoyer les informations de sélection au dispositif de réseau de sorte que le dispositif de réseau modifie une configuration en fonction des informations de sélection.

15. Dispositif de terminal selon la revendication 14, dans lequel les informations de demande d'économie d'électricité envoyées par le module d'envoi (61) comprennent des informations de quantité d'électricité du dispositif de terminal, lesquelles informations de quantité d'électricité comprennent au moins une relation de mappage avec un mode de service de sorte que le dispositif de réseau détermine une relation de mappage entre les informations de quantité d'électricité et le mode de service, et acquière le mode de service en fonction de la relation de mappage correspondant aux informations de quantité d'électricité.

16. Dispositif de terminal selon la revendication 14 ou 15, dans lequel le module de modification de configuration (64) comprend :
une unité d'analyse de puissance (641) conçue pour déterminer une puissance de transmission correspondant au mode de service déterminé dans les informations de sélection, de sorte que le module d'envoi (61) envoie des données au dispositif de réseau en fonction de la puissance de transmission correspondant au mode de service.

17. Dispositif de terminal selon la revendication 14 ou 15, dans lequel le module de modification de configuration (64) comprend :
une unité d'analyse de puissance (641) conçue pour envoyer des données au dispositif de réseau en fonction de la puissance de transmission maximale du dispositif de terminal.
